# EUROPÄISCHE PATENTSCHRIFT

(11) **EP 1 439 328 B1**
(45) Veröffentlichungstag und Bekanntmachung des Hinweises auf die Patenterteilung: **01.08.2007**
(21) Anmeldenummer: 04000841.9
(22) Anmeldetag: 16.01.2004
(51) Int. Cl.: F16H 61/00, F16H 37/08

(54) **Verfahren zum Steuern von Übersetzungsänderungen an einem Getriebe für Kraftfahrzeuge**
Method of controlling the ratio changes of a vehicle transmission
Méthode de commande de changements de vitesses d'une transmission de véhicule

(30) Priorität: 18.01.2003 DE 10301736
(43) Veröffentlichungstag der Anmeldung: 21.07.2004
(73) Patentinhaber: AUDI AG, 85045 Ingolstadt (DE)
(72) Erfinder: Märkl, Johann, 85128 Nassenfels (DE); Schenker, Mario, 85049 Ingolstadt (DE)
(74) Vertreter: Thielmann, Frank

(56) Entgegenhaltungen:
- DE-A1- 10 302 992
- US-A- 5 823 052

## Beschreibung

Die Erfindung betrifft ein Verfahren zum Steuern der Übersetzungsänderungen an einem Getriebe für Kraftfahrzeuge nach dem Oberbegriff des Anspruchs 1, wie aus der US-A-5 823 052 bekannt ist.

Ein gattungsgemäßes Verfahren zum Steuern der Übersetzungsänderungen an einem Getriebe für Kraftfahrzeuge ist aus Audi-Serienfahrzeugen mit der Bezeichnung Audi-Multitronic bekannt. Dazu umfasst das Getriebe einen stufenlos verstellbaren Getriebeteil in der Art eines steuerbaren Umschlingungsgetriebes als Variator und eine Steuereinheit womit in einem durch Fahrereingriff wählbaren Automatik-Modus das Übersetzungsverhältnis stufenlos im gesamten Verstellbereich betriebsangepasst selbsttätig variierbar ist. Alternativ kann durch einen Fahrereingriff auch ein manueller Modus, der als Tiptronic-Modus bekannt ist, mittels eines Wählhebels oder über Lenkradschalter gewählt werden, wobei in Stufenabständen vorgegebene Übersetzungsverhältnisse als Gänge anwählbar und am stufenlosen Getriebe als wechselbare feste Gangschaltpunkte mit den zugeordneten gangbestimmten Übersetzungsverhältnissen mittels der Steuereinheit einstellbar sind. Alle diese Gangschaltpunkte werden dabei gleichermaßen durch eine Variatorverstellung angefahren, so dass sich für einen Fahrer keine merkbaren Unterschiede bei unterschiedlichen Gangwechseln ergeben.

Um insbesondere auch stark motorisierte Fahrzeuge mit stufenlosen Getrieben ausrüsten zu können, ist es bekannt, einem stufenlosen Getriebeteil ein Leistungsverzweigungsteil zuzuordnen (DE 196 31 236 C2, Fig 2) der mittels zumindest einer Bereichswechselkupplung in eine niedrigere und eine höhere Gesamtübersetzung umschaltbar ist, wobei der stufenlose Getriebeteil in einem der Übersetzungsbereiche mit umgekehrter Kraftflussrichtung wirkt dergestalt, dass bei einem vorgegebenen Umschalt-Gesamtübersetzungsverhältnis und einem diesem zugeordneten Übersetzungsverhältnis des stufenlosen Getriebeteils ein Synchronpunkt als Umschaltpunkt für den Automatik-Modus bestimmt ist, an dem die einander zugeordneten Kupplungselemente der mindestens einen Bereichswechselkupplung mit gleicher Drehzahl laufen, so dass dort die Bereichswechselkupplung synchronisiert geschaltet werden kann.

Bei einem solchen Getriebe muss abhängig vom Fahrzustand zwischen den Bereichen des Leistungsverzweigungsteils mittels der Bereichswechselkupplung umgeschalten werden, wobei es insbesondere bei großen Motordrehzahländerungen zu einer Änderung der Beschleunigung der getriebeinternen Drehmassen kommt, was zu einem spürbaren Beschleunigungsruck des Fahrzeugs führen kann. Bei Versuchen ein solches Getriebe auch mit dem eingangs geschilderten manuellen Modus zu betreiben, bei dem eine sportliche Fahrweise mit einer sehr schnellen Reaktion des Fahrzeugs erreicht werden soll, haben sich aufgrund der hohen erforderlichen Dynamik ruckartig spürbare Bereichsumschaltungen ergeben. Diese waren für einen Fahrer wesentlich unkomfortabler spürbar als Gangschaltungen ohne Bereichsumschaltung, welche nur durch eine Variatorverstellung erfolgten. Ein solcher unkomfortabler Schaltvorgang mit Bereichswechsel, der spürbar unterschiedlich zu komfortableren Schaltvorgängen ohne Bereichswechsel verläuft, ist bei hochwertigen, stark motorisierten und auf Komfort ausgelegten Fahrzeugen nicht hinnehmbar.

Aufgabe der Erfindung ist es daher, ein gattungsgemäßes Verfahren zum Steuern der Übersetzungsänderung an einem Getriebe für Kraftfahrzeuge so weiterzubilden, dass sich im manuellen Modus bei Verwendung eines leistungsverzweigten Getriebes keine für einen Fahrer spürbaren Unterschiede zwischen einer Schaltung mit Bereichswechsel und einer Schaltung ohne Bereichswechsel ergeben.

Diese Aufgabe wird mit den Merkmalen des Anspruchs 1 gelöst.

Dem stufenlosen Getriebeteil ist ein Leistungsverzweigungsteil zugeordnet, der mittels einer Bereichswechselkupplung in eine niedrigere und eine höhere Gesamtübersetzung umschaltbar ist, wobei der stufenlose Getriebeteil in einem der Übersetzungsbereiche mit umgekehrter Kraftflussrichtung wirkt. Bei einem vorgegebenen Umschalt-Gesamtübersetzungsverhältnis und diesem zugeordneten Übersetzungsverhältnis des stufenlosen Getriebeteils liegt ein Synchronpunkt an dem die einander zugeordneten Kupplungselemente der mindestens einen Bereichswechselkupplung mit gleicher Drehzahl laufen. Dieser Synchronpunkt ist der Umschaltpunkt (USP) im Automatikmodus, wobei für eine Vergleichmäßigung der Bereichsumschaltung auch geringe Orehzahtunterschiede vorliegen können.

Bezogen auf das Umschalt-Gesamtübersetzungsverhältnis des Umschaltpunkts (USP) liegen ein Gangschaltpunkt bei einem kleineren Gesamtübersetzungsverhältnis und entsprechend ein darauf folgender Gangschaltpunkt bei einem größeren Gesamtübersetzungsverhältnis bei jeweils gleichen Übersetzungsverhältnissen des stufenlosen Getriebeteils. Die Schaltung zwischen diesen beiden, beidseitig des Gangschaltpunkts liegenden Gangschaltpunkten erfolgt ohne Verstellung des Übersetzungsverhältnisses des Stufengetriebeteils nur durch Schaltung der wenigstens einen Bereichswechsel-Kupplung, wobei gemäß Anspruch 2 die Bereichswechselkupplung mit einem Kupplungsschlupf gesteuert wird.

Dadurch wird durch Ansteuerung der wenigstens einen Bereichswechselkupplung erreicht, dass der Gangwechsel zwischen diesen Gangschaltpunkten mit Bereichswechsel komfortabel ohne merklichen Unterschied zu den anderen Gangwechseln ohne Bereichswechsel erfolgt. Der Fahrer wird somit bei einem Gangwechsel zwischen diesen Gängen weder unkomfortabel beeinträchtigt noch dadurch verunsichert, dass bei einem Gangwechsel zwischen diesen Gängen merkliche andere Beschleunigungsempfindungen als bei anderen Gangwechseln auftreten.

Vorteilhaft wird gemäß Anspruch 3 bei einem Getriebe mit sechs Gangschaltpunkten die Schaltung mit Bereichswechsel zwischen dem dritten und vierten Gangschaltpunkt vorgenommen.

Die Erfindung wird nachfolgend anhand einer Zeichnung näher beschrieben.

Die einzige Figur zeigt eine erste Grafik mit Darstellung der manuellen Schaltpunkte des stufenlosen Getriebeteils in einem manuellen Schaltmodus, wobei dessen Übersetzungsverhältnis über dem Gesamtübersetzungsverhältnis des automatischen Getriebes aufgetragen ist.

Grundsätzlich wird von einem automatischen Getriebe für Kraftfahrzeuge ausgegangen, wie es beispielsweise aus der DE 196 31 236 C2 beschrieben ist und dass sich im Wesentlichen aus einem stufenlosen Getriebeteil und einem Leistungsverzweigungsgetriebe zusammensetzt und elektrohydraulisch gesteuert ist.

Soll ein derartiges automatisches Getriebe auch in einem manuellen Modus betreibbar sein, wobei dann analog einem Schaltgetriebe mit festen Übersetzungsverhältnissen Schaltpunkte vorgegeben sind, die über den stufenlosen Getriebeteil nach Auslösen entsprechender Schaltsignale elektrohydraulisch angefahren werden, so wird über ein Getriebesteuergerät wie nachstehend beschreiben verfahren:

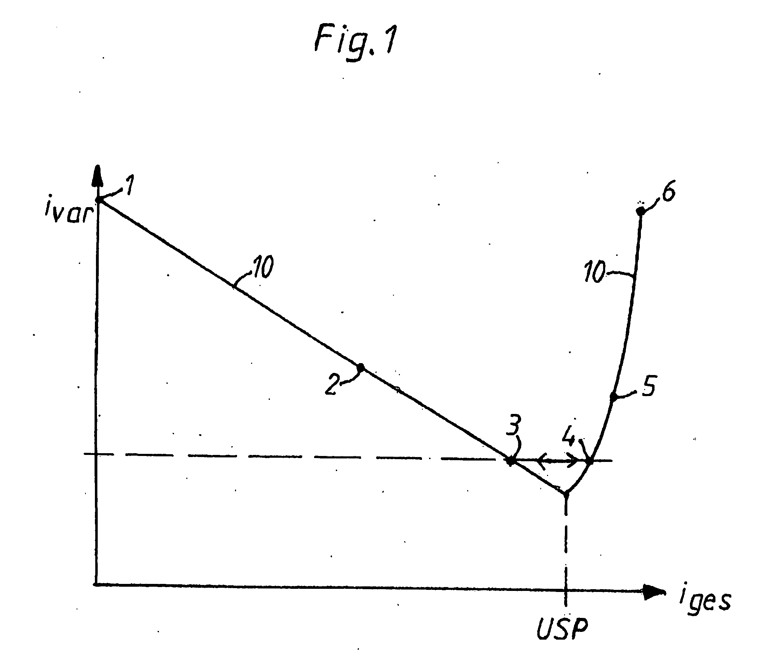

In der Fig. 1 ist in der Abszisse das Gesamtübersetzungsverhältnis i_{ges} und in der Ordinate das Übersetzungsverhältnis iᵥₐᵣ des stufenlosen Getriebeteils aufgetragen, wobei die eingezeichnete Kurve 10 das Übersetzungsverhältnis iᵥₐᵣ über dem Gesamtübersetzungsverhältnis i_{ges} wiedergibt.

Wie dies der Fig. 1 weiter entnommen werden kann, sind dem in der Fig. 1 linken Leistungsverzweigungsteil hier beispielhaft drei Gangschaltpunkte fest zugeordnet, während die Gangschaltpunkte 4 bis 6 dem in der Fig. 1 rechten Leistungsverzweigungsteil zugeordnet sind. Der als Synchronpunkt für den Automatik-Modus bestimmte Umschaltpunkt: USP liegt hier zwischen dem dritten und vierten Gangschaltpunkt.

Dieser dritte und vierte Gangschaltpunkt weisen jeweils bei unterschiedlichen Gesamtübersetzungsverhältnissen i_{ges} gleiche Übersetzungsverhältnisse iᵥₐᵣ des stufenlosen Getriebeteils auf.

Soll nun im manuellen Modus ein Umschalten von dem dritten Gangschaltpunkt auf den vierten Gangschaltpunkt bzw. umgekehrt erfolgen, so wird dies nur durch die Ansteuerung der wenigstens einen Bereichswechselkupplung ohne Verstellung des Übersetzungsverhältnisses iᵥₐᵣ des stufenlosen Getriebeteils erreicht, so dass dieses Umschalten zwischen dem dritten und vierten Gangschaltpunkt ruckfrei und komfortabel erfolgt.

Im Automatik-Modus werden dagegen die beiden Leistungsverzweigungsteile bis zum Umschaltpunkt USP ausgefahren unter ständiger Verstellung des Übersetzungsverhältnisses iᵥₐᵣ, so dass nach Durchfahren des Umschaltpunktes USP ein Überwechseln auf den jeweils anderen Leistungsverzweigungsteil erfolgt.

## Patentansprüche

1. Verfahren zum Steuern der Übersetzungsänderungen an einem Getriebe für Kraftfahrzeuge, mit einem stufenlos verstellbaren Getriebeteil und einer Steuereinheit womit in einem Automatik-Modus das Übersetzungsverhältnis (iᵥₐᵣ) stufenlos im gesamten Verstellbereich betriebsangepasst variierbar ist und womit in einem manuellen Modus vom Fahrer mittels eines Wahlelements bestimmte, in Stufenabständen vorgegebene Übersetzungsverhältnisse als Gänge anwählbar und am stufenlosen Getriebe als wechselbare feste Gangschaltpunkte mit den zugeordneten gangbestimmten Übersetzungsverhältnissen mittels der Steuereinheit einstellbar sind, wobei
dem stufenlosen Getriebeteil ein Leistungsverzweigungsteil zugeordnet ist, der mittels zumindest einer Bereichswechselkupplung in eine niedrigere und eine höhere Gesamtübersetzung umschaltbar ist, **dadurch gekennzeichnet, dass** der stufenlose Getriebeteil in einem der Übersetzungsbereiche mit umgekehrter Kraftflussrichtung wirkt dergestalt,
dass bei einem vorgegebenen Umschaft-Gesamtübersetzungsverhältnis (i_{ges}) und diesem zugeordneten Übersetzungsverhältnis (iᵥₐᵣ) des stufenlosen Getriebeteils ein Synchronpunkt als Umschaltpunkt (USP) für den Automatik-Modus bestimmt ist, an dem die einander zugeordneten Kupplungselemente der mindestens einen Bereichswechselkupplung mit gleicher Drehzahl laufen,
dass im manuellen Modus bezogen auf das Umschalt-Gesamtübersetzungsverhältnis des Umschaltpunkts (USP) ein Gangschaltpunkt (3) bei einem kleineren Gesamtübersetzungsverhältnis (i_{ges}) und entsprechend ein darauf folgender Gangschaltpunkt (4) bei einem größeren Gesamtübersetzungsverhältnis (i_{ges}) benachbart liegen bei jeweils gleichen Übersetzungsverhältnissen (iᵥₐᵣ) des stufenlosen Getriebeteils und
dass die Schaltung zwischen diesen beiden Gangschaltpunkten (3, 4) ohne Verstellung des Übersetzungsverhältnisses (iᵥₐᵣ) des stufenlosen Getriebeteils nur durch Schaltung der wenigstens einen Bereichswechsel-Kupplung erfolgt.

2. Verfahren nach Anspruch 1, **dadurch gekennzeichnet, dass** die Bereichswechselkupplung mit einem Kupplungsschlupf gesteuert wird.

3. Verfahren nach Anspruch 1 oder 2, **dadurch gekennzeichnet, dass** bei sechs stufenförmigen Gangschaltpunkten (1 bis 6) des stufenlosen Getriebeteils der Umschaltpunkt (USP) der Bereichswechselkupplung zwischen dem dritten und vierten Gangschaltpunkt (3, 4) liegt.

## Claims

1. Method of controlling the ratio changes in a gearbox for motor vehicles comprising a continuously variable gearbox part and a control unit, in which, in an automatic mode, the gear ratio (iᵥₐᵣ) can be varied adaptively continuously over the overall range of adjustment and, in a manual mode, gear ratios at predetermined stepped intervals can be selected as gears by the driver by means of a selector element and can be set as changeable fixed gear-change points with the associated gear ratios in the continuously variable gearbox by means of the control unit, wherein a power-splitting part which can be changed over by means of at least one range-change clutch to a lower and a higher overall ratio is associated with the continuously variable gearbox part, **characterised in that** the continuously variable gearbox part acts with the power flow in the reverse direction in one of the ratio ranges in such a manner that, at a predetermined change-over overall gear ratio (i_{ges}) and the associated gear ratio (iᵥₐᵣ) of the continuously variable gearbox part, a point of synchronism is determined as the change-over point (USP) for the automatic mode, at which the associated coupling elements of the at least one range-change clutch run at the same speed, that, in the manual mode, with respect to the change-over overall gear ratio of the change-over point (USP), a gear-change point (3) with a smaller overall gear ratio (i_{ges}) and, in a corresponding manner, a subsequent gear-change point (4) with a larger overall gear ratio (i_{ges}) are situated adjacent to one another with the same gear ratios (iᵥₐᵣ) of the continuously variable gearbox part and that changing between these two gear-change points (3, 4) is effected without adjusting the gear ratio (iᵥₐᵣ) of the continuously variable gearbox part and only by changing the at least one range-change clutch.

2. Method according to claim 1, **characterised in that** the range-change clutch is controlled by a clutch slip.

3. Method according to claim 1 or claim 2, **characterised in that**, when the continuously variable gearbox part has six stepped gear-change points (1 to 6), the change-over point (USP) of the range-change clutch is situated between the third and fourth gear-change points (3, 4).

## Revendications

1. Procédé de commande de changements de vitesses d'une transmission pour des véhicules automobiles avec un élément de transmission à réglage continu et avec une unité de commande, grâce à quoi dans un mode automatique, le rapport de transmission (iᵥₐᵣ) adapté au fonctionnement dans toute la gamme de réglage, est variable en continu et grâce à quoi, dans un mode manuel, les rapports de transmission déterminés au moyen d'un élément de sélection, prédéfinis en écarts d'étage sont sélectionnables par le conducteur sous forme de vitesses et sont réglables sur la transmission à réglage continu au moyen de l'unité de commande sous forme de points fixes de changement de vitesse changeables avec les rapports de transmissions déterminés correspondants,
un élément de branchement de puissance étant affecté à l'élément de transmission à réglage continu et commutable au moyen d'au moins un accouplement interchangeable de gamme dans une transmission totale plus basse et plus élevée, **caractérisée en ce que** l'élément de transmission à réglage continu agit dans les gammes de transmission avec un sens de flux de force inversé, de sorte
que, pour un rapport total de transmission de commutation prédéfini (i_{ges}) et le rapport de transmission (iᵥₐᵣ) - affecté à ce dernier - de l'élément de transmission à réglage continu, un point synchrone est déterminé comme point de commutation (USP) pour le mode automatique, pour lequel les éléments d'accouplements affectés les uns aux autres d'au moins un accouplement interchangeable de gamme fonctionnent avec le même nombre de rotations,que, en mode manuel, par rapport au rapport total de transmission de commutation du point de commutation (USP), un point de changement de vitesse (3) pour un rapport total de transmission (i_{ges}) plus petit et en conséquence un point de changement de vitesse consécutif (4) pour un rapport total de transmission (i_{ges}) plus grand sont adjacents pour des rapports de transmission identiques (iᵥₐᵣ) de l'élément de transmission à réglage continu et
que la commutation entre ces deux points de changement de vitesses (3, 4) est réalisée sans réglage du rapport de transmission (iᵥₐᵣ) de l'élément de transmission à réglage continu uniquement par la commutation d'au moins un accouplement interchangeable de gamme.

2. Procédé selon la revendication 1, **caractérisée en ce que** l'accouplement interchangeable de gamme est commandé avec un glissement de l'embrayage.

3. Procédé selon la revendication 1 ou 2, **caractérisée en ce que** pour six points de changement de vitesse (1 à 6) étagés de l'élément de transmission à réglage continu, le point de commutation (USP) de l'accouplement interchangeable de gamme se situe entre le troisième et le quatrième point de changement de vitesse (3, 4).
